**Europäisches Patentamt**

**European Patent Office**

**Office européen des brevets**

(11) Veröffentlichungsnummer : **0 342 183 B1**

(12) **EUROPÄISCHE PATENTSCHRIFT**

(45) Veröffentlichungstag der Patentschrift :
**24.06.92 Patentblatt 92/26**

(21) Anmeldenummer : **89890137.6**

(22) Anmeldetag : **08.05.89**

(51) Int. Cl.⁵ : **F16N 7/40,** F16H 57/04,
B60K 17/344

(54) **Schmiereinrichtung für Verteilergetriebe eines Kraftfahrzeuges.**

(30) Priorität : **09.05.88 AT 1200/88**

(43) Veröffentlichungstag der Anmeldung :
**15.11.89 Patentblatt 89/46**

(45) Bekanntmachung des Hinweises auf die
Patenterteilung :
**24.06.92 Patentblatt 92/26**

(84) Benannte Vertragsstaaten :
**AT DE ES FR GB IT NL SE**

(56) Entgegenhaltungen :
**FR-A- 1 341 263**

(56) Entgegenhaltungen :
**FR-A- 1 385 562**
**US-A- 2 590 870**
**US-A- 3 083 790**
**US-A- 4 359 909**

(73) Patentinhaber : **STEYR-DAIMLER-PUCH**
**AKTIENGESELLSCHAFT**
**Franz-Josefs-Kai 51**
**A-1010 Wien (AT)**

(72) Erfinder : **Reif, Johann Peter, Dipl.-Ing.Dr.**
**Sternallee 143**
**A-5360 St. Wolfgang (AT)**
Erfinder : **Krebs, Franz, Dipl.-Ing.**
**Sanzinstrasse 13**
**A-4600 Wels (AT)**

## Beschreibung

Die Erfindung betrifft eine Schmiereinrichtung für Verteilergetriebe eines Kraftfahrzeuges mit wenigstens zwei Triebachsen, wobei auf der zugleich eine Schmiermittelpumpe treibenden Getriebeantriebswelle wenigstens ein Losrad sitzt und von der Schmiermittelpumpe Druckleitungen zu einem Spritzrohr für die Zahneingriffsstellen und gegebenenfalls anderen Schmierstellen führen und wobei im Getriebegehäuse Fangtaschen für von den Zahnrädern abspritzendes Schmiermittel vorgesehen sind.

Bei einer aus der Praxis bekannten Schmiereinrichtung wird das sich in den Fangtaschen sammelnde Schmiermittel zur Schmierung der Hauptlager der Getriebewelle herangezogen. Die Versorgung des Gleitlagers des bzw. der Losräder auf der Getriebeantriebswelle erfolgt von der Schmiermittelpumpe her, wobei eine Art Rückschlagventil vorgesehen ist, um zu verhindern, daß der Hauptstrom des Druckmittels in die Längsbohrung der Getriebeantriebswelle gelangt und dann die Zahneingriffsstellen zu wenig ausgespritztes Schmiermittel erhalten. Dabei besteht der Nachteil, daß das rückschlagventilartige Element bei höheren Drehzahlen der Getriebeantriebswelle unkontrollierte Bewegungen ausführt und dann seine Funktion nicht oder nur unvollständig erfüllt. Der Hauptnachteil der bekannten Schmiereinrichtung besteht aber darin, daß beim Abschleppen des Fahrzeuges, also bei Stillstand der Getriebeantriebswelle auch die Schmiermittelpumpe nicht mehr arbeitet, das Lager des oder der Losräder demnach ohne Schmierung verbleibt, obwohl sich die Losräder drehen, da sie ja von den Triebachsen des rollenden Fahrzeuges her angetrieben werden. Es besteht daher die Vorschrift, beim Abschleppen des Fahrzeuges die Antriebsverbindung zu den Triebachsen zu lösen, was mit umständlichen bzw. unangenehmen Manipulationen verbunden ist. Eine mangelnde Schmierung des bzw. der Losräder tritt auch bei nur geringer Drehzahl der Getriebeantriebswelle und vor allem dann auf, wenn längere Zeit hindurch rückwärtsgefahren wird, die Schmiermittelpumpe also verkehrt dreht und demnach auch nicht mehr richtig fördert.

Somit liegt der Erfindung die Aufgabe zugrunde, diese Mängel zu beseitigen und die eingangs geschilderte Schmiereinrichtung so zu verbessern, daß die Schmierung der Lagerstelle des oder der Losräder auf der Getriebeantriebswelle unabhängig von jeweiligen Betriebszuständen des Kraftfahrzeuges auf jeden Fall gesichert ist.

Die Erfindung löst die gestellte Aufgabe dadurch, daß eine oberhalb der Getriebeantriebswelle angeordnete Fangtasche über eine Längsbohrung und wenigstens eine Querbohrung der Getriebeantriebswelle mit dem Lager des bzw. der Losräder leitungsverbunden ist.

In der Fangtasche wird auch dann Schmiermittel angesammelt, wenn die Getriebeantriebswelle bei geschlepptem Fahrzeug stillsteht, weil ja die miteinander kämmenden Zahnräder von den Triebachsen her auf jeden Fall gedreht werden und dadurch Schmiermittel aus dem Schmiermittelsumpf hochgefördert und abgespritzt wird. Da die Fangtasche oberhalb der Getriebeantriebswelle liegt, ergibt sich ein genügendes Gefälle, um die Lagerstelle des oder der Losräder über die Quer- und Längsbohrung mit Schmiermittel zu versorgen. Dies gilt selbstverständlich auch dann, wenn sich bei Rückwärtsfahrt die Schmiermittelpumpe verkehrt dreht.

In weiterer Ausbildung der Erfindung führt die Zuleitung von der Fangtasche zum Oberteil eines Ventilraumes, in dessen Unterteil eine Druckleitung der Schmiermittelpumpe mündet und von dessen Mittelteil eine Bohrung zur Längsbohrung der Getriebeantriebswelle ausgeht, wobei im Ventilraum ein vorzugsweise als Kugel ausgebildeter Ventilkörper auf- und abbeweglich angeordnet ist, der je nach Pumpendruck den Oberoder Unterteil des Ventilraumes verschließt.

Hier wird also die Lagerstelle des oder der Losräder im Normalbetrieb mit Schmiermittel von der Schmiermittelpumpe versorgt, da dann der Ventilkörper den Oberteil des Ventilraumes, in den die Zuleitung von der Fangtasche mündet, verschließt. Sobald aber der Druck von der Pumpe her aus irgendeinem Grund unter ein bestimmtes Maß absinkt, fällt der Ventilkörper unter seinem Eigengewicht abwärts, verschließt die Pumpenzuleitung und gibt dem Schmiermittelzufluß vom Oberteil des Ventilraumes, d.h. von der Fangtasche her frei, so daß auch in diesem Falle die Schmiermittelversorgung der Losradlagerstelle bzw. -stellen gesichert ist. Dabei handelt es sich um eine einfache Konstruktion, da es nur darum geht, den Ventilraum mit zwei Ventilsitzen zu schaffen, was mittels einer einfachen Bohrung und einer eingeschraubten Hohlschraube erfolgen kann.

In der Zeichnung ist der Erfindungsgegenstand beispielsweise dargestellt, und zwar zeigen

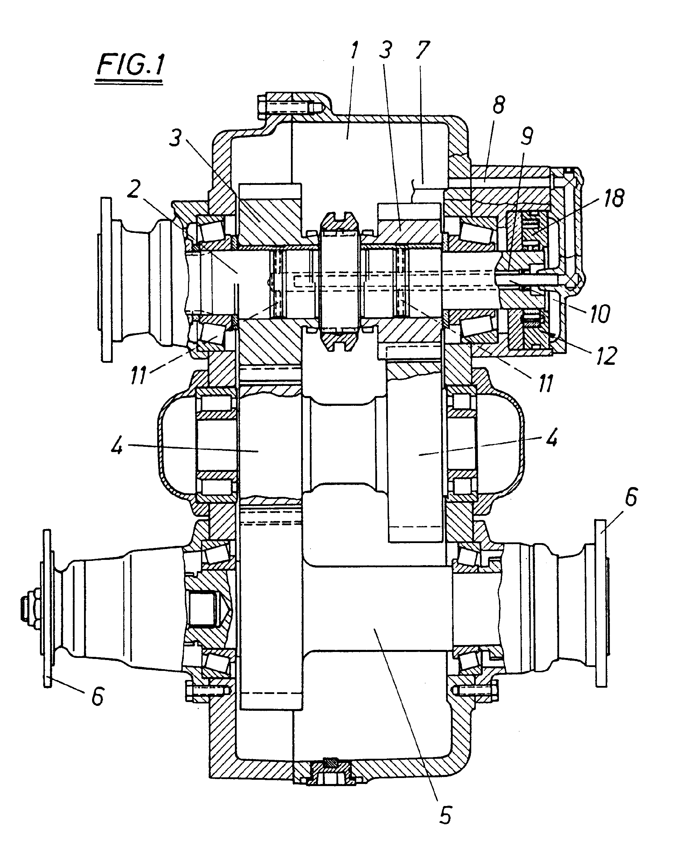

Fig. 1 das Verteilergetriebe eines Kraftfahrzeuges im Teilschnitt,

Fig. 2 den Bereich der Schmiermittelpumpe bei einer Konstruktionsvariante in größerem Maßstab im Schnitt nach der Linie II-II der Fig. 3,

Fig. 3 einen zugehörigen Querschnitt nach der Linie III-III der Fig. 2

Fig. 4 einen weiteren Querschnitt nach der Linie IV-IV der Fig. 2 und

Fig. 5 den Oberteil des Getriebegehäuses im Teilschnitt im Bereich der Schaltmuffe zwischen den Losrädern.

Im Gehäuse 1 eines zweistufigen Verteilergetriebes eines Kraftfahrzeuges ist oben die Antriebswelle 2 gelagert, auf der zwei Losräder 3 angeordnet sind. Die Losräder 3 treiben über Zwischenräder 4 die Abtriebswelle 5 an, an denen mit Hilfe von Flanschen 6 nicht dargestellte, zu zwei Triebachsen führende Wellen angeschlossen sind. Im Gehäuse 1 ist oberhalb der Antriebswelle 2 eine Fangtasche 7 für von den Losrädern 3 abgespritztes Schmiermittel angeordnet. Von dieser Fangtasche 7 führen Kanalbohrungen 8 zu einem in eine Längsbohrung 9 der Antriebswelle 2 einragenden Rohr 10, wobei die Lagerstellen der Losräder 3 auf der Antriebswelle 2 durch Querbohrungen 11 mit der Längsbohrung 9 verbunden sind und so die Schmiermittelversorgung der Lagerstellen der Losräder 3 gesichert ist.

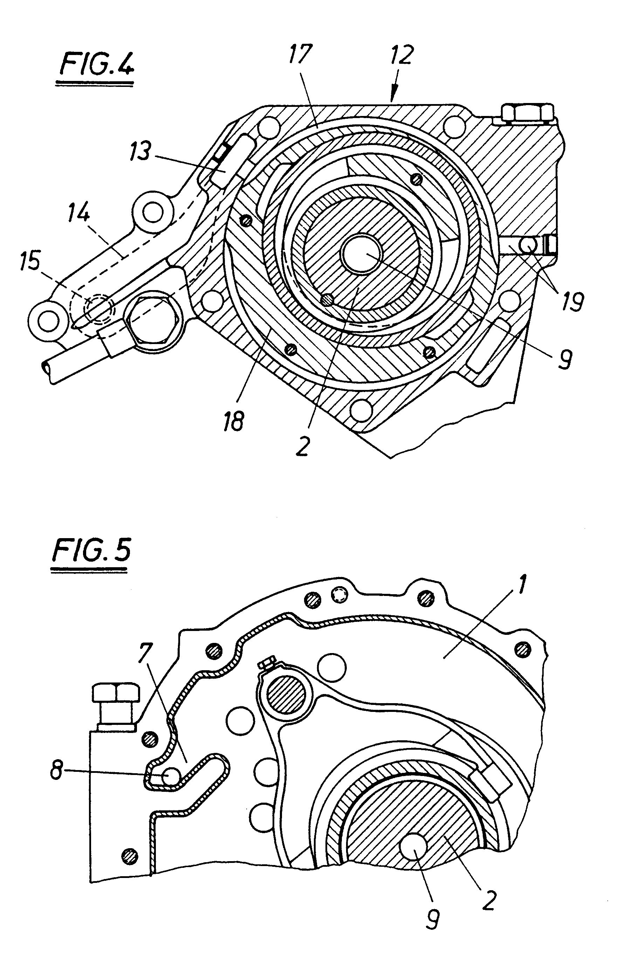

Die Antriebswelle 2 treibt zugleich eine als Zahnradpumpe ausgebildete Schmiermittelpumpe 12 an, von deren Druckraum 13 Leitungsbohrungen bzw. Kanäle 14 zu einem im Gehäuse 1 parallel zu den Wellen angeordneten Spritzrohr 15 (Fig. 4) führen, wobei dieses Spritzrohr 15 die Aufgabe hat, die Zahneingriffe der Zahnräder des Getriebes mit Schmiermittel zu versorgen.

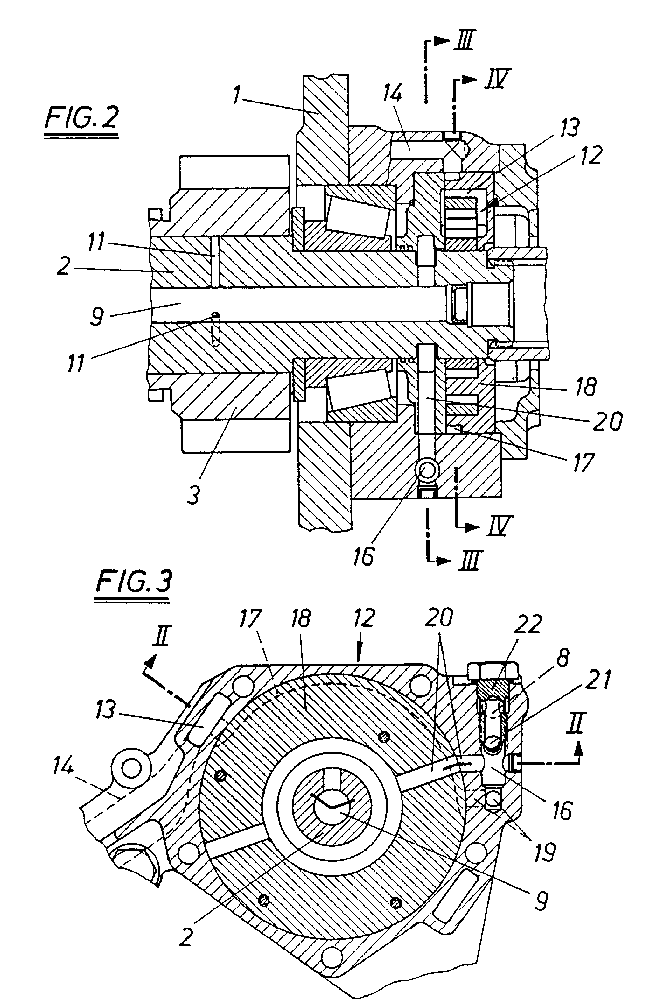

Bei der Ausführungsvariante nach den Fig. 2 bis 4 sind die Kanalbohrungen 8 von der Fangtasche 7 zum Oberteil eines Ventilraumes 16 geführt, in dessen Unterteil vom Pumpendruckraum 13 her über eine Umfangsnut 17 im Pumpengehäuse 18 und weitere Bohrungen 19 eine Druckleitung mündet. Vom Mittelteil des Ventilraumes 16 geht eine Bohrung 20 zur Längsbohrung 9 in der Antriebswelle 2 aus. Im Ventilraum 16 ist ein als Kugel 21 ausgebildeter Ventilkörper auf- und abbewegbar angeordnet, der je nach Pumpendruck den Ober- oder Unterteil des Ventilraumes 16 verschließt. In der in Fig. 3 dargestellten Stellung ist der Druck von der Schmiermittelpumpe 12, der sich vom Druckraum 13 über die Umfangsnut 17 und die Bohrungen 19 in den Ventilraum 16 fortpflanzt, so hoch, daß die Ventilkugel 21 auf ihren oberen, von einer Hohlschraube 22 gebildeten Sitz gedrückt wird und Druckmittel über die Bohrungen 20 und die Längsbohrung 9 sowie die Querbohrungen 11 zu den Lagerstellen der Losräder 3 gelangt. Sinkt der Pumpendruck aus irgendeinem Grund, so fällt die Ventilkugel 21 ab, verschließt die Leitungsbohrungen 19 und Schmiermittel kann aus der Fangtasche 7 über die Kanalbohrungen 8 zur Längsbohrung 9 bzw. über die Querbohrungen 11 zu den Lagerstellen der Losräder 3 gelangen, so daß diese bei jedem Betriebszustand geschmiert werden.

## Patentansprüche

1. Schmiereinrichtung für Verteilergetriebe eines Kraftfahrzeuges mit wenigstens zwei Triebachsen, wobei auf der zugleich eine Schmiermittelpumpe (12) treibenden Getriebeantriebswelle (2) wenigstens ein Losrad (3) sitzt und von der Schmiermittelpumpe (12) Druckleitungen (14) zu einem Spritzrohr (15) für die Zahneingriffsstellen und gegebenenfalls anderen Schmierstellen führen und wobei im Getriebegehäuse (1) Fangtaschen (7) für von den Zahnrädern (3,4) abspritzendes Schmiermittel vorgesehen sind, **dadurch gekennzeichnet**, daß eine oberhalb der Getriebeantriebswelle (2) angeordnete Fangtasche (7) über eine Längsbohrung (9) und wenigstens eine Querbohrung (11) der Getriebeantriebswelle (2) mit dem Lager des bzw. der Losräder (3) leitungsverbunden ist.

2. Schmiereinrichtung nach Anspruch 1, **dadurch gekennzeichnet**, daß die Zuleitung (8) von der Fangtasche (7) zum Oberteil eines Ventilraumes (16) führt, in dessen Unterteil eine Druckleitung (19) der Schmiermittelpumpe (12) mündet und von dessen Mittelteil eine Bohrung (20) zur Längsbohrung (9) der Getriebeantriebswelle (2) ausgeht, wobei im Ventilraum (16) ein vorzugsweise als Kugel (21) ausgebildeteter Ventilkörper auf- und abbeweglich angeordnet ist, der je nach Pumpendruck den Oberoder Unterteil des Ventilraumes (16) verschließt.

## Claims

1. A lubricating system for transfer cases of a motor vehicle having at least two drive axles, wherein the input shaft (2) of the transmission drives also a lubricant pump (12), at least one sliding wheel (3) is mounted on said input shaft (2), pressure lines (14) lead from the lubricant pump (12) to a discharge tube (15) for the meshing teeth and optionally to other lubricated points, and pockets (7) for collecting lubricant splashed from the gears (3, 4) are provided in the transmission housing (1), characterized in that a collecting pocket (7) disposed above the input shaft (2) of the transmission communicates through a longitudinal bore (9) and at least one transverse bore (11) of the input shaft (2) of the transmission with the bearing for the sliding wheel or wheels (3).

2. A lubricating device system according to claim 1, characterized in that the supply line (8) extends from the collecting pocket (7) to the top portion of a valve chamber (16), a pressure line (19) from the lubricant pump (12) opens into the lower portion of said valve chamber, a bore (20) leads from the intermediate portion of said valve chamber to the longitudinal bore (9) of the input shaft (2) of the transmission, and a valve member consisting preferably of a ball (21) is movable up and down in the valve chamber (16) and in dependence on the pump pressure seals the top or bottom portion of the valve chamber (16).

## Revendications

1. Dispositif de graissage pour une boîte de transfert sur un véhicule à moteur ayant au moins deux essieux moteurs dans laquelle au moins un pignon fou (3) est monté sur l'arbre moteur d'entrée (2) entraînant en même temps une pompe à huile (12), et des conduites sous pression (14) sont prévues qui partent de la pompe à huile (12) et conduisent à un tube (15) de projection dans les zones d'engrènement des dents et éventuellement à d'autres points de lubrification, et dans laquelle sont prévues dans le carter (1) de la boîte des poches de réception (7) pour le lubrifiant projeté par les roues dentées (3, 4), caractérisé en ce qu'une poche de réception (7) disposée au-dessus de l'arbre moteur d'entrée (2) est reliée par des conduites au coussinet du ou des pignons fous (3) par l'intermédiaire d'un canal longitudinal (9) et d'au moins un canal transversal (11) de l'arbre moteur d'entrée (2).

2. Dispositif de graissage selon la revendication 1, caractérisé en ce que la conduite d'arrivée (8) partant de la poche de réception (7) aboutit à la partie supérieure d'une chambre de vanne (16) dans la partie inférieure de laquelle débouche une conduite sous pression (19) de la pompe à huile (12) et de la partie médiane de laquelle part un canal (20) aboutissant au canal longitudinal (9) de l'arbre moteur d'entrée (2), et, dans cette même chambre de vanne (16) est disposé un corps de clapet constitué de préférence par une bille (21) mobile vers le haut et vers le bas, qui, suivant la pression de refoulement de la pompe, obture la partie supérieure ou la partie inférieure de la chambre de vanne (16).

## FIG.1

_FIG.2_

_FIG.3_

## FIG.4

## FIG.5